# EUROPÄISCHE PATENTSCHRIFT

(11) **EP 2 223 610 B1**
(45) Veröffentlichungstag und Bekanntmachung des Hinweises auf die Patenterteilung: **25.06.2014**
(21) Anmeldenummer: 10000783.0
(22) Anmeldetag: 27.01.2010
(51) Int. Cl.: A23L 1/00, A23L 1/212, A23P 1/08

(54) **Verfahren und Vorrichtung zum Befüllen von einen Hohlraum aufweisendem Gemüse oder Früchten, insbesondere von Peperoni**
Method and device for filling a cavity in vegetables or fruits, in particular pepperoni
Procédé et dispositif de remplissage d'un espace creux au dedans des légumes ou des fruits, notamment des piments

(30) Priorität: 28.02.2009 DE 102009011149
(43) Veröffentlichungstag der Anmeldung: 01.09.2010
(73) Patentinhaber: Karb, Erhard, 97357 Prichsenstadt (DE)
(72) Erfinder: Karb, Erhard, 97357 Prichsenstadt (DE)
(74) Vertreter: Ostertag, Ulrich

(56) Entgegenhaltungen:
- EP-A1- 0 262 247
- DE-U1-202006 004 409
- US-A1- 2004 115 320

## Beschreibung

Die Erfindung betrifft ein Verfahren zum Befüllen von einen Hohlraum aufweisendem Gemüse oder Früchten nach dem Oberbegriff des Patentanspruchs 1, sowie
eine Vorrichtung zum Befüllen von einen Hohlraum aufweisendem Gemüse oder Früchten nach dem Oberbegriff des Patentanspruchs 4.

Gemüse oder Früchte, die mit einer insbesondere pastösen Füllmasse gefüllt sind, genießen bei den Verbrauchern zunehmende Beliebtheit. Ein prominentes Beispiel dafür sind mit Käse gefüllte Peperoni. Bisher wurde die Befüllung dieser Gemüse oder Früchte im Wesentlichen von Hand vorgenommen, eine Aufgabe, die angesichts der großen Zahl von zu befüllenden Gegenständen offensichtlich sehr mühsam ist. Versuche, den Befüllvorgang stärker zu automatisieren, stießen in verschiedener Hinsicht auf Schwierigkeiten; ein besonderes Problem ist dabei, die vollständige Befüllung des Gemüses oder der Früchte sicherzustellen und, wenn sie erreicht ist, die weitere Befüllung abzubrechen.

Ein Verfahren und eine Vorrichtung der eingangs genannten Art sind aus der US 2004/0 115 320 A1 bekannt geworden. Dort werden zu befüllende Nahrungsmittel in eine Aufnahmevorrichtung gebracht, wobei eine Positioniervorrichtung das Stück Nahrungsmittel entweder in eine am Boden der Aufnahmevorrichtung sitzende Injektionsnadel hineintreibt oder aber, bei beweglich ausgebildeter Injektionsnadel, beim Einstich derselben in das Nahrungsmittel festhält. Danach wird durch die Injektionsnadel eine gewünschte Menge einer Gewürzsoße injiziert. Die Menge wird bestimmt durch eine den Durchfluss steuernde Einrichtung, zum Beispiel eine Pumpe oder ein Ventil. Die Betrachtung unterschiedlich großer Hohlräume in dem zu befüllenden Nahrungsmittel und Angaben über daraus folgende Maßnahmen fehlen in dieser Druckschrift.

Aufgabe der vorliegenden Erfindung ist es, ein Verfahren bzw. eine Vorrichtung der eingangs genannten Art zu schaffen, bei welchem bzw. welcher die von Hand zu erbringenden Arbeiten reduziert sind.

Diese Aufgabe wird, was das Verfahren angeht, erfindungsgemäß durch das im Patentanspruch 1 angegebene Verfahren gelöst.

Von besonderem Vorteil ist dieses Verfahren bei der Befüllung von Peperoni, insbesondere mit Käse gefüllte Peperoni. Solche sind am Markt besonders begehrt.

Die oben genannte Aufgabe wird, was die Vorrichtung angeht, erfindungsgemäß mit den im Patentanspruch 4 angegebenen Mitteln gelöst.

Die Erfindung macht sich also zunutze, dass bei geeigneter Halterung des Befülldorns und/oder des Gemüses oder der Frucht auf dem Befülldorn der Befülldruck zu einer Relativbewegung zwischen Befülldorn und Gemüse oder Frucht führt. Diese Relativbewegung stellt nicht nur einen Teil der zum Abziehen des Gemüses oder der Frucht ohnehin benötigten Bewegung dar, sondern ist auch ein Mass dafür, wie weit der Befüllvorgang fortgeschritten ist. Es kann also im konkreten Einzelfall immer eine Relativposition festgelegt werden, bei welcher der Befüllvorgang wunschgemäß abgeschlossen ist. Im allgemeinen ist die Bezugsstelle an dem Gemüse oder der Frucht dasjenige Ende des Gemüses oder der Frucht, über das der Befüllvorgang erfolgt. Je nach Größe des Gemüses oder der Frucht kann der Weg, über den die Relativbewegung erfolgt, durchaus unterschiedlich sein.

Im allgemeinen wird die Relativbewegung aus einer Bewegung des Gemüses oder der Frucht auf dem Befülldorn bestehen; letzterer kann in diesem Falle unbeweglich sein. Einer besonderen Halterung des Gemüses oder der Frucht auf dem Befülldorn wird es häufig dann nicht bedürfen.

Bei einer besonders robusten und unempfindlichen Ausgestaltung der Erfindung ist die Detektionseinrichtung dadurch gebildet, dass
a) der Befülldorn metallisch und mit einem Pol einer Spannungsquelle verbunden ist;
b) eine Kontaktvorrichtung vorgesehen ist, die federnd gegen die Außenfläche des Gemüses oder der Frucht andrückbar ist, bei Fehlen eines Gemüses oder einer Frucht an dem Befülldorn anliegt und mit dem anderen Pol der Spannungsquelle verbunden ist, derart, dass über die Kontaktvorrichtung und den Befülldorn ein Strom fließt, wenn sie an dem Befülldorn anliegt;
c) eine Erfassungseinrichtung für den über die Kontaktvorrichtung und den Befülldorn fließenden Strom vorgesehen ist.

Bei der vorliegenden Erfindung sucht sich nach dem oben Gesagten das Gemüse oder die Frucht bei zunehmender Befüllung von selbst von dem Fülldorn abzuschieben. Die Kontaktvorrichtung stellt zuverlässig denjenigen Augenblick fest, an welchem die Befüllung so gut wie abgeschlossen ist; dies ist nämlich der Moment, an dem die Kontaktvorrichtung von der Außenfläche des Gemüses oder der Frucht abrutscht und in Anlage an den Befülldorn gerät. In diesem Moment beginnt ein Strom zu fließen, der dann von der erfindungsgemäßen Erfassungseinrichtung erkannt und als Signal dafür verwendet wird, den Befüllvorgang nunmehr zu beenden oder jedenfalls die Beendigung mit einer kurzen Verzögerung einzuleiten.

Bei einer vorteilhaften Ausführungsform der Erfindung umfasst die Kontaktvorrichtung zwei Metalldrähte, die unterschiedlich weit von dem freien Ende des Befülldorns entfernt sind. Am Ende des Befüllvorganges gleitet zunächst der erste Metalldraht an der Außenfläche des Gemüses oder der Frucht ab und stellt einen Kontakt zum Befülldorn her. Der hierdurch verursachte Strom kann dann als Signal für das kurz bevorstehende Ende des Befüllvorganges verstanden werden; entsprechende Maßnahmen können eingeleitet werden. Wenn dann auch der zweite Metalldraht von dem Gemüse oder der Frucht abgeglitten und in Kontakt mit dem Befülldorn geraten ist, ist der Befüllvorgang vollständig abgeschlossen und die Zuführung von Füllmasse zu dem Gemüse oder der Frucht wird abgebrochen.

Erfindungsgemäß kann eine Abhebevorrichtung vorgesehen sein, mit deren Hilfe die Kontaktvorrichtung entgegen der Wirkung der Federkraft bewegt werden kann. Eine derartige Abhebevorrichtung erleichtert das Aufstecken der noch nicht befüllten Gemüse oder Früchte auf den Befülldorn.

Als alternative Detektionseinrichtungen kommen insbesondere eine Lichtschranke oder eine elektronische Kamera mit einer entsprechenden Bildverarbeitung in Frage.

Größere Stückzahlen können mit derjenigen Ausführungsform der erfindungsgemäßen Vorrichtung verarbeitet werden, bei welcher eine Fördereinrichtung vorgesehen ist, an welcher eine Mehrzahl von Befülldornen gehalten ist, die nacheinander mit aufgestecktem Gemüse oder Frucht taktweise in die Befüllstation gebracht werden können.

Besonders gute Füllungen der Frucht werden bei Verwendung eines Befülldornes erzielt, der einen sich auf sein Ende hin sich verjüngenden Bereich aufweist, in welchem mindestens eine Austrittsöffnung für die Füllmasse nach außen mündet. Die austretende Füllmasse hat dann sowohl eine axiale Bewegungskomponente, welche die Relativbewegung zwischen Gemüse oder Frucht und Befülldorn fördert, als auch eine radiale Bewegungskomponente, welche der Befüllung des Hohlraums in seitlicher Richtung dienlich ist.

Wiederum besonders vorteilhaft ist die erfindungsgemäße Vorrichtung, wenn sie zum Befüllen von Peperoni, insbesondere mit Käse, ausgebildet ist.

Ein Ausführungsbeispiel der Erfindung wird nachstehend anhand der Zeichnung näher erläutert; es zeigen
- Figuren 1 bis 3: schematisch eine Vorrichtung zum Befüllen von Peperoni in drei verschiedenen Phasen des Befüllvorganges;
- Figur 4: die Seitenansicht eines speziellen Befülldorns;
- Figur 5: die Endansicht des Befülldorns von Figur 4.

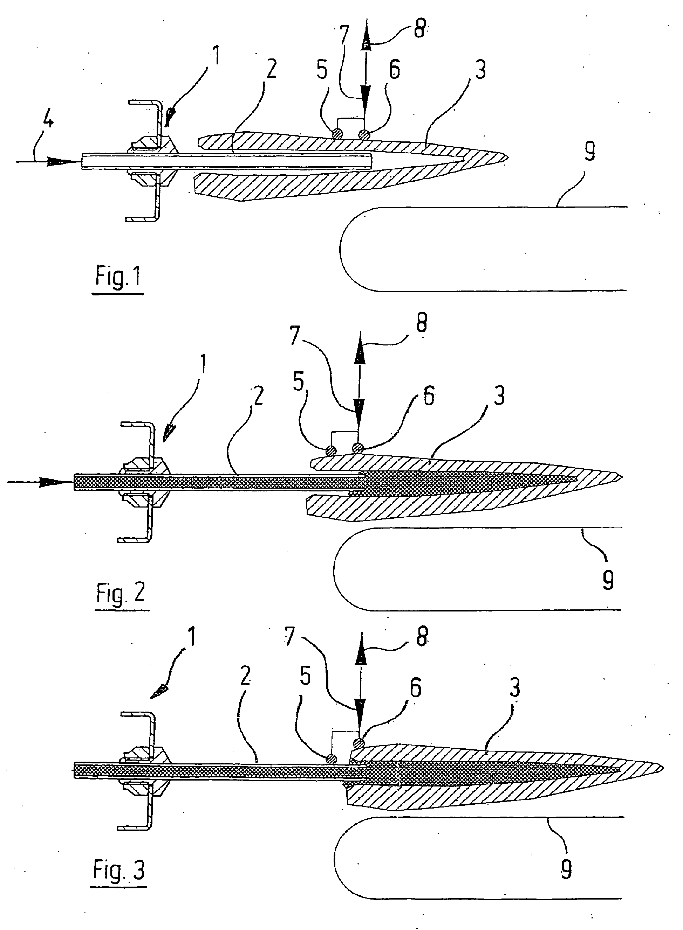

In der Zeichnung ist mit dem Bezugszeichen 1 als Beispiel für eine Fördereinrichtung eine Förderkette gekennzeichnet, die sich senkrecht zur Zeichenebene bewegt. Der Antrieb und die Führung der Förderkette 1 sind der Einfachheit halber nicht dargestellt. Die Förderkette 1 trägt in regelmäßigen Abständen eine Vielzahl von Befülldornen 2, bei denen es sich um einfache metallische Röhrchen handelt. Die mit Käse oder einer anderen Füllmasse zu befüllenden Peperoni 3 werden manuell auf die vorbeiwandernden Befülldorne 2 in der Weise aufgesteckt, wie dies in Figur 1 zu erkennen ist. Die Befülldorne 2 sind dabei verhältnismäßig weit in den inneren Hohlraum der Peperoni 3 eingeschoben.

Bei ihrer durch die Förderkette 1 bewirkten taktweisen Bewegung geraten die Befülldorne 2 hintereinander jeweils an eine Befüllstation, in welcher das außerhalb der Peperoni 3 freiliegende Ende, in der Zeichnung links, in Kommunikation mit dem steuerbaren Auslassventil einer Befüllpumpe gerät. Diese Situation ist in Figur 1 dargestellt. Befüllpumpe und Auslassventil sind selbst nicht gezeigt; durch den Pfeil 4 soll angedeutet werden, dass das Auslassventil gerade geöffnet wurde und die Käsemasse in den Befülldorn 2 eingeschoben wird.

In der Befüllstation befindet sich eine Kontaktvorrichtung in Form von zwei Kontaktdrähten 5, 6, die federnd von oben gegen die Peperoni 3 angedrückt werden. Dieses federnde Andrücken kann beispielsweise durch einseitiges Einspannen der Kontaktdrähte 5, 6 aufgrund deren Eigenelastizität oder durch eine gesonderte, in der Zeichnung nicht dargestellte Feder bewirkt werden. Die Federkraft ist durch den Pfeil 7 angedeutet. Außerdem ist, ebenfalls an der Befüllstation und nur symbolisch durch den Pfeil 8 dargestellt, eine Anhebeeinrichtung in Form eines Hubmagnets vorhanden, die in der Lage ist, die Kontaktdrähte 5, 6 in Richtung des Pfeiles 8, also nach oben, von der Peperoni 3 abzuheben.

In der Befüllstation befindet sich schließlich noch ein endloses Förderband 9, das in der Zeichnung schematisch und teilweise angedeutet ist und auf welches die befüllten Peperoni 3 zum Abtransport abgelegt werden können.

Die Kontaktdrähte 5, 6 sind mit einem Pol einer nicht dargestellten Spannungsquelle verbunden; die Befülldorne 2 liegen auf Masse. Mit Hilfe einer Strommesseinrichtung kann festgestellt werden, ob über die Kontaktdrähte 5 , 6 ein Strom zum Befülldorn 2 fließt.

Der Befüllvorgang geschieht folgendermaßen: Wie bereits oben erwähnt, werden die verschiedenen Befülldorne 2 vor der in der Zeichnung dargestellten Befüllstation mit Hilfe von Personal mit den hohlen Peperoni 3 bestückt. Die Förderkette 1 bewegt sich taktweise weiter, so dass die verschiedenen Befülldorne 2 mit den aufgesteckten Peperoni 3 nacheinander in die in Figur 1 dargestellte Position gelangen. Nunmehr wird entsprechend dem Pfeil 4 das Auslassventil der Befüllpumpe geöffnet; die Käsemasse beginnt sich in den Hohlraum ("Befülldom") der Peperoni 3 zu schieben. Dabei wird zunächst der zwischen dem in der Peperoni 3 liegenden Ende des Befülldorns 2 und dem inneren Ende des Hohlraums der Peperoni 3 liegende Hohlraum aufgefüllt.

Ist dies geschehen und wird, wie in Figur 2 dargestellt, der Befüllvorgang mit Käse fortgesetzt, so wird durch den Druck der Füllmasse die Peperoni 3 auf dem Befülldorn 2 in der Zeichnung nach rechts geschoben, wodurch das Ende des Befülldorns 2 näher an der Öffnung des Hohlraumes der Peperoni 3 zu liegen kommt. Da die Kontaktdrähte 5, 6 nicht in Berührung mit dem entsprechenden Befülldorn 2 sind, fließt zu diesem Zeitpunkt noch kein Strom. Dies ändert sich jedoch, wenn durch fortgesetzte Befüllung der Peperoni 3 mit Käsemasse die Peperoni 3 so weit in der Zeichnung nach rechts verschoben ist, bis der erste Kontaktdraht 5 von der Peperoni 3 freikommt und aufgrund der Federwirkung gegen die Außenmantelfläche des Befülldornes 2 gedrückt wird. Nunmehr kann über den Kontaktdraht 5 und den Befülldorn 2 ein Strom fließen. Dieser Strom wird erfasst und gibt der Anlagensteuerung ein Signal, welches das nahe Ende des Befüllvorganges anzeigt.

Mit fortschreitender Befüllung schiebt sich die Peperoni 3 in der Zeichnung weiter nach rechts, bis dann auch der zweite Kontaktdraht 6 von der Peperoni 3 abrutscht und sich gegen den Befülldorn 2 anlegt. Der nun zusätzlich fließende Strom kann als Signal dafür verwendet werden, den Befüllvorgang abzubrechen.

Nunmehr kann die Peperoni 3 von dem Befülldorn 2 abgenommen werden, was durch ein entsprechendes Nachschieben einer kleinen Menge Käsemasse erfolgen kann. Die Peperoni 3 fällt sodann auf das Förderband 9 und wird abtransportiert.

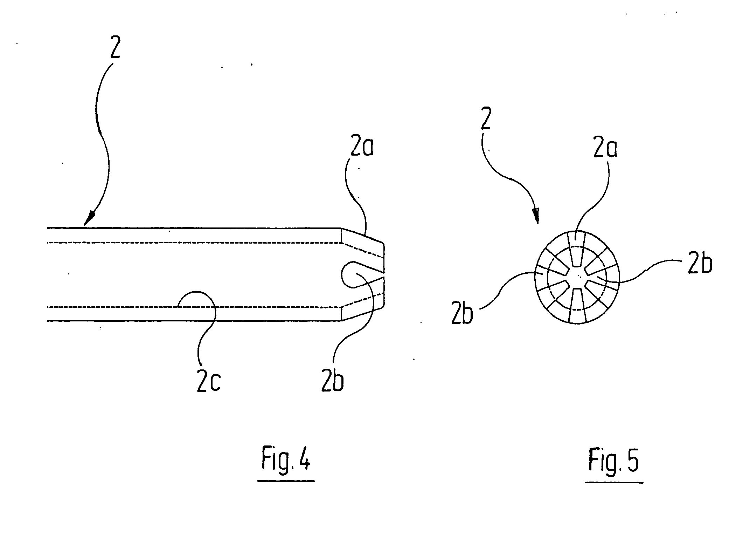

In Figur 4 ist in Seitenansicht ein Befülldorn 2 dargestellt, mit dem sich besonders gute Ergebnise erzielen lassen. Dieser zeichnet sich dadurch aus, dass er einen sich auf sein Ende zu konisch verjüngenden Bereich 2a aufweist. In die Mantelfläche des konischen Bereiches 2a münden sternenförmig sechs Austrittsöffnungen 2b, die mit dem die Füllmasse führenden Kanal 2c im Inneren des Befülldorns 2 kommunizieren. Diese Ausgestaltung hat zur Folge, dass die aus den Austrittsöffnungen 2b kommende Füllmasse zum einen eine axiale Richtungskomponte der Bewegung "nach vorne" besitzt. Diese begünstigt die Befüllung des Hohlraumes in Längsrichtung sowie die Abschiebebewegung der Peperoni 3 von dem Befülldorn 2. Gleichzeitig besitzt die austretende Füllmasse auch eine radiale Richtungskomponente der Bewegung. Dies sorgt für eine zuverlässige Befüllung des Hohlraums der Peperoni 3 in seitlicher Richtung.

## Patentansprüche

1. Verfahren zum Befüllen von einen Hohlraum aufweisendem Gemüse oder Früchten (3), bei dem ein Befülldorn (2) in den Hohlraum des Gemüses oder der Frucht (3) eingeschoben wird und über diesen der Hohlraum mit einer Füllmasse gefüllt wird,
wobei
eine Relativbewegung zwischen dem Befülldorn (2) und dem Gemüse oder der Frucht (3) erzeugt wird,
**dadurch gekennzeichnet,**
**dass** die Relativbewegung durch den Druck der in den Hohlraum eingebrachten Füllmasse (2) erzeugt wird, und der Befüllvorgang abgebrochen wird, wenn Befülldorn (2) und Gemüse oder Frucht (3) eine bestimmte Relativposition erreicht haben.

2. Verfahren nach Anspruch 1, **dadurch gekennzeichnet, dass** es zum Befüllen von Peperoni ausgebildet ist.

3. Verfahren nach Anspruch 1 oder 2, **dadurch gekennzeichnet, dass** es zum Befüllen mit Käse ausgebildet ist.

4. Vorrichtung zum Befüllen von einen Hohlraum aufweisendem Gemüse oder Früchten (3) mit mindestens einem Befülldorn (2), der in den Hohlraum des Gemüses oder der Frucht (3) einschiebbar und über den in einer Befüllstation der Hohlraum mit Füllmasse befüllbar ist,
wobei
die Halterung des Befülldorns (2) und/oder die Halterung des Gemüses oder der Frucht (3) auf dem Befülldorn (2) so ausgestaltet sind, dass eine Relativbewegung zwischen Befülldorn (2) und Gemüse oder Frucht (3) möglich ist, **dadurch gekennzeichnet, dass**
die Halterung des Befülldorns (2) und/oder die Halterung des Gemüses oder der Frucht (3) auf dem Befülldorn (2) so ausgestaltet sind, dass
die Relativbewegung unter dem Druck der in den Hohlraum des Gemüses oder der Frucht (3) eingebrachten Füllmasse zustande kommt, und dass eine Detektionseinrichtung (2, 5 bis 8) vorgesehen ist, mit welcher eine bestimmte Relativposition zwischen Befülldorn (2) und Gemüse oder Frucht (3) erfassbar ist und die bei Erreichen dieser Relativposition den Befüllvorgang abbricht.

5. Vorrichtung nach Anspruch 4, **dadurch gekennzeichnet, dass** die Detektionseinrichtung dadurch gebildet ist, dass
a) der Befülldorn (2) metallisch und mit einem Pol einer Spannungsquelle verbunden ist;
b) eine Kontaktvorrichtung (5, 6) vorgesehen ist, die federnd gegen die Außenfläche des Gemüses oder der Frucht (3) andrückbar ist, bei Fehlen eines Gemüses oder einer Frucht (3) an dem Befülldorn (2) anliegt und mit dem anderen Pol der Spannungsquelle verbunden ist, derart, dass über die Kontaktvorrichtung (5, 6) und den Befülldorn (2) ein Strom fließt, wenn sie an dem Befülldorn (2) anliegt;
c) eine Erfassungseinrichtung für den über die Kontaktvorrichtung (5, 6) und den Befülldorn (2) fließenden Strom vorgesehen ist.

6. Vorrichtung nach Anspruch 5, **dadurch gekennzeichnet,**
**dass** die Kontaktvorrichtung zwei Metalldrähte (5, 6) umfasst, die unterschiedlich weit von dem freien Ende des Befülldorns (2) entfernt sind.

7. Vorrichtung nach Anspruch 5 oder 6, **dadurch gekennzeichnet, dass** eine Abhebevorrichtung (8) vorgesehen ist, mit deren Hilfe die Kontaktvorrichtung (5, 6) entgegen der Wirkung der Federkraft bewegt werden kann.

8. Vorrichtung nach Anspruch 4, **dadurch gekennzeichnet,**
**dass** die Detektionseinrichtung eine Lichtschranke umfasst.

9. Vorrichtung nach Anspruch 4, **dadurch gekennzeichnet,**
**dass** die Detektionseinrichtung eine elektronische Kamera umfasst.

10. Vorrichtung nach einem der Ansprüche 4 bis 9, **dadurch gekennzeichnet, dass** eine Fördereinrichtung (1) vorgesehen ist, an welcher eine Mehrzahl von Befülldornen (2) gehalten ist, die nacheinander mit aufgestecktem Gemüse oder Frucht (3) taktweise in die Befüllstation gebracht werden können.

11. Vorrichtung nach einem der Ansprüche 4 bis 10, **dadurch**
**gekennzeichnet, dass** der Befülldorn (2) einen sich auf sein Ende hin verjüngenden Bereich (2a) aufweist, in welchem mindestens eine Austrittsöffnung (2b) für die Füllmasse nach aussen mündet.

12. Vorrichtung nach einem der Ansprüche 4 bis 11, **dadurch**
**gekennzeichnet, dass** sie zum Befüllen von Peperoni ausgebildet ist.

13. Vorrichtung nach einem der Ansprüche 4 bis 12, **dadurch**
**gekennzeichnet, dass** sie zum Befüllen mit Käse ausgebildet ist.

## Claims

1. A method for filling vegetables or fruit (3) having a cavity, in which a filling mandrel (2) is inserted into the cavity of the vegetable or fruit (3) and the cavity is filled with a filling mass by way of this filling mandrel,
wherein
a relative movement is generated between the filling mandrel (2) and the vegetable or fruit (3)
**characterised in that**
the relative movement is generated by the pressure of the filling mass (2) introduced into the cavity, and the filling procedure is interrupted when the filling mandrel (2) and the vegetable or fruit (3) have reached a particular relative position.

2. A method according to Claim 1, **characterised in that** it is designed for filling peppers.

3. A method according to Claim 1 or 2, **characterised in that** it is designed for filling with cheese.

4. A device for filling vegetables or fruit (3) having a cavity by means of at least one filling mandrel (2) which can be inserted into the cavity of the vegetable or fruit (3) and by way of which the cavity can be filled with filling mass in a filling station,
wherein
the holder of the filling mandrel (2) and/or the holder of the vegetable or fruit (3) on the filling mandrel (2) is constructed so that a relative movement between the filling mandrel (2) and the vegetable or fruit (3) is possible,
**characterised in that**
the holder of the filling mandrel (2) and/or the holder of the vegetable or fruit (3) on the filling mandrel (2) are constructed so that
the relative movement is effected by the pressure of the filling mass introduced into the cavity of the vegetable or fruit (3) and **in that** a detection device (2, 5 to 8) is provided by means of which a particular relative position between the filling mandrel (2) and the vegetable or fruit (3) can be detected and which interrupts the filling procedure when this relative position is reached.

5. A device according to Claim 4, **characterised in that** the detection device is formed **in that**
a) the filling mandrel (2) is metallic and is connected to a pole of a voltage source;
b) a contact device (5, 6) is provided, which can be pressed in resilient manner against the outer surface of the vegetable or fruit (3), lies against the filling mandrel (2) when there is no vegetable or fruit (3) present and is connected to the other pole of the voltage source in such a way that, when it lies against the filling mandrel (2), a current flows over the contact device (5, 6) and the filling mandrel (2);
c) a detection device is provided for the current flowing over the contact device (5, 6) and the filling mandrel (2).

6. A device according to Claim 5, **characterised in that** the contact device comprises two metal wires (5, 6) which are at different distances from the free end of the filling mandrel (2).

7. A device according to Claim 5 or 6, **characterised in that** a lifting device (8) is provided, with the aid of which the contact device (5, 6) can be moved against the effect of the spring force.

8. A device according to Claim 4, **characterised in that** the detection device comprises a light barrier.

9. A device according to Claim 4, **characterised in that** the detection device comprises an electronic camera.

10. A device according to one of Claims 4 to 9, **characterised in that** a conveyor device (1) is provided, on which a plurality of filling mandrels (2) are held which can be brought in cycles into the filling station, one after another, with the vegetable or fruit (3) placed thereon.

11. A device according to one of Claims 4 to 10, **characterised in that** the filling mandrel (2) has a region (2a) which tapers towards its free end and in which at least one discharge opening (2b) for the filling mass leads outwards.

12. A device according to one of Claims 4 to 11, **characterised in that** it is designed to fill peppers.

13. A device according to one of Claims 4 to 12, **characterised in that** it is designed for filling with cheese.

## Revendications

1. Procédé de remplissage de légumes ou de fruits (3) présentant un espace creux, selon lequel on enfile une broche de remplissage (2) dans l'espace creux du légume ou du fruit (3) et on remplit l'espace creux d'une masse de remplissage par l'intermédiaire de cette broche,
sachant qu'on produit un mouvement relatif entre la broche de remplissage (2) et le légume et le fruit (3),
**caractérisé en ce que** le mouvement relatif est produit par la pression de la masse de remplissage introduite dans l'espace creux, et l'opération de remplissage est arrêtée lorsque le broche de remplissage (2) et le légume ou le fruit (3) ont atteint une position relative déterminée.

2. Procédé selon la revendication 1, **caractérisé en ce qu'**il est conçu pour remplir des piments.

3. Procédé selon la revendication 1 ou 2, **caractérisé en ce qu'**il est conçu pour effectuer un remplissage avec du fromage.

4. Dispositif de remplissage de légumes ou de fruits (3) présentant un espace creux, avec au moins une broche de remplissage (2) qui peut être enfilée dans l'espace creux du légume ou du fruit (3) et par l'intermédiaire de laquelle l'espace creux peut, à un poste de remplissage, être rempli d'une masse de remplissage,
sachant que le support de la broche de remplissage (2) et/ou le support du légume ou du fruit (3) sur la broche de remplissage (2) sont conçus de telle sorte qu'un mouvement relatif est possible entre la broche de remplissage (2) et le légume ou le fruit (3), **caractérisé en ce que** le support de la broche de remplissage (2) et/ou le support du légume ou du fruit (3) sur la broche de remplissage (2) sont conçus de telle sorte que le mouvement relatif se réalise sous la pression de la masse de remplissage introduite dans l'espace creux du légume ou du fruit (3), et **en ce qu'**il est prévu un système de détection (2, 5 à 8) qui permet de détecter une position relative déterminée entre la broche de remplissage (2) et le légume ou le fruit (3) et qui arrête l'opération de remplissage à l'atteinte de cette position relative.

5. Dispositif selon la revendication 4, **caractérisé en ce que** le système de détection est formé par le fait que
a) la broche de remplissage (2) est métallique et est reliée à un pôle d'une source de tension électrique ;
b) il est prévu un dispositif de contact (5, 6) qui peut être pressé élastiquement contre la surface extérieure du légume ou du fruit (3), qui s'applique contre la broche de remplissage (2) en l'absence de légume ou de fruit (3) et qui est relié à l'autre pôle de la source de tension électrique, de telle sorte qu'un courant s'écoule via le dispositif de contact (5, 6) et la broche de remplissage (2) lorsque ce dispositif s'applique contre la broche de remplissage (2) ;
c) il est prévu un moyen pour mesurer le courant s'écoulant via le dispositif de contact (5, 6) et la broche de remplissage (2).

6. Dispositif selon la revendication 5, **caractérisé en ce que** le dispositif de contact comprend deux fils métalliques (5, 6) qui se trouvent à des distances différentes de l'extrémité libre de la broche de remplissage (2).

7. Dispositif selon la revendication 5 ou 6, **caractérisé en ce qu'**il est prévu un dispositif de relèvement (8), à l'aide duquel le dispositif de contact (5, 6) peut être déplacé à l'encontre de l'action de la force élastique.

8. Dispositif selon la revendication 4, **caractérisé en ce que** le système de détection comprend une barrière photoélectrique.

9. Dispositif selon la revendication 4, **caractérisé en ce que** le système de détection comprend une caméra électronique.

10. Dispositif selon l'une des revendications 4 à 9, **caractérisé en ce qu'**il est prévu un moyen de transport (1) sur lequel est fixée une pluralité de broches de remplissage (2) qui peuvent être successivement et cycliquement amenées au poste de remplissage avec un légume ou un fruit (3) emmanché sur elles.

11. Dispositif selon l'une des revendications 4 à 10, **caractérisé en ce que** la broche de remplissage (2) présente une région (2a) qui se rétrécit en direction de son extrémité et dans laquelle au moins une ouverture de sortie (2b) pour la masse de remplissage débouche vers l'extérieur.

12. Dispositif selon l'une des revendications 4 à 11, **caractérisé en ce qu'**il est conçu pour remplir des piments.

13. Dispositif selon l'une des revendications 4 à 12, **caractérisé en ce qu'**il est conçu pour effectuer un remplissage avec du fromage.
